# EUROPEAN PATENT SPECIFICATION

(11) **EP 1 897 281 B1**
(45) Date of publication and mention of the grant of the patent: **30.03.2011**
(21) Application number: 06769070.1
(22) Date of filing: 27.06.2006
(51) Int. Cl.: H04L 12/56, H04L 29/06

(54) **METHOD AND SYSTEM FOR PROVIDING STREAMING SERVICE IN HOME NETWORK**
VERFAHREN UND SYSTEM ZUR BEREITSTELLUNG EINES STREAMING-DIENSTES IN EINEM HEIMATNETZ
PROCEDE ET SYSTEME PERMETTANT DE FOURNIR UN SERVICE EN CONTINU (STREAMING) DANS UN RESEAU DOMESTIQUE

(30) Priority: 29.06.2005 KR 20050057311
(43) Date of publication of application: 12.03.2008
(73) Proprietor: Samsung Electronics Co., Ltd., Suwon-si, Gyeonggi-do 442-742 (KR)
(72) Inventor: WON, Jong-Eun, Seoul 135-270 (KR); CHO, Jung-Yon, 241-1802 Hwanggol maeul 2-danji Apt, Gyeonggi-do 443-744 (KR)
(74) Representative: Rooney, John-Paul
(86) International application number: PCT/KR2006/002494
(87) International publication number: WO 2007/001151

(56) References cited:
- US-A- 6 160 818
- US-A1- 2002 143 847
- US-A1- 2002 178 232
- US-A1- 2005 047 340
- US-A1- 2005 120 131
- US-B1- 6 470 406
- US-B1- 6 529 907
- NG J K-Y ET AL: "A distributed MPEG video player system with feedback and QoS control" REAL-TIME COMPUTING SYSTEMS AND APPLICATIONS, 1998. PROCEEDINGS. FIFTH INTERNATIONAL CONFERENCE ON HIROSHIMA, JAPAN 27-29 OCT. 1998, LOS ALAMITOS, CA, USA,IEEE COMPUT. SOC, US, 27 October 1998 (1998-10-27), pages 91-100, XP010312403 ISBN: 978-0-8186-9209-3
- LIM S.-O., JUNG K.-M., SEO K.-H.: 'A traffic control algorithm in diverse home networks through priority reassignment' COMMUNICATION SYSTEMS, 2003. ICCS 2002, THE 8TH INTERNATIONAL CONFERENCE vol. 1, 25 November 2002 - 28 November 2002, pages 160 - 163, XP010629201

## Description

### Technical Field

Methods and systems consistent with the present invention relate generally to providing a streaming service and, more particularly, to providing a streaming service in a home network, which, when a new streaming connection cannot be provided by a server, allows a priority between an existing connection and a new connection to be determined, thus providing reasonable connection management.

### Background Art

A media server, which plays a role of providing various types of content to different clients via a network, must simultaneously provide a streaming service to a plurality of media clients according to different situations. In this case, the number of streaming connections that can be simultaneously provided by the server may be limited depending on the processing power of a server, the bandwidth of the network, or the like. In an existing streaming service, when a situation in which a new connection cannot be provided occurs, a method in which the server rejects a new connection service request has been used.

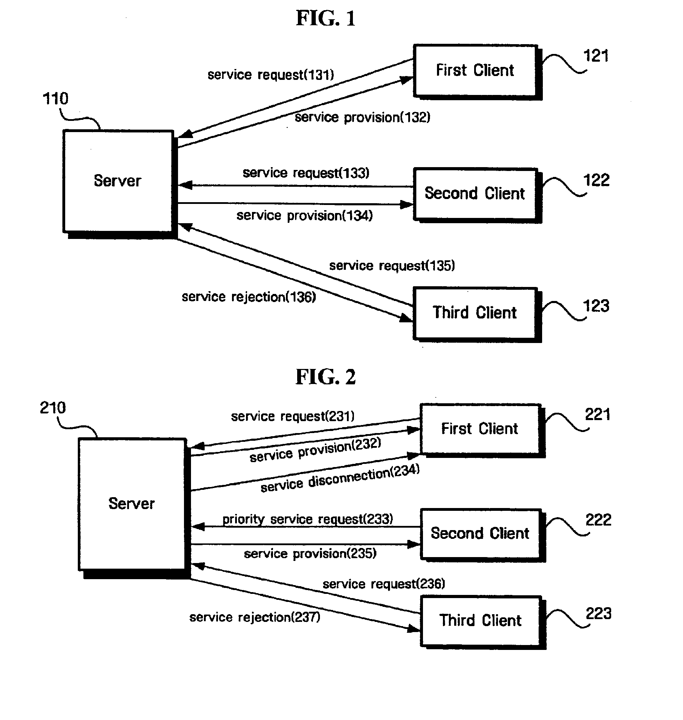

FIG. 1 is a diagram illustrating a related art method of providing a streaming service in a home network.

Referring to FIG. 1, a server 110, which provides digital content, and one or more clients, that is, first, second and third clients121 to 123, each of which requests a streaming service from the server, are connected over a network. The first, second and third clients may exist in different devices or in a single device. Each of the clients transmits a service request to the server 110 requesting desired content from the server. The server provides the content to the corresponding client in a streaming manner in response to the request.

When the first client 121 transmits a service request 131 for a specific media file to the server 110, the server 110 transmits data about the requested content to the first client 132. That is, the server 110 provides a streaming service to the first client 121. The second client 122 transmits a service request 133 for a specific media file to the server 110, the server 110 determines whether service can be provided based on the service capability thereof (processing power, network bandwidth, etc.), and provides a streaming service to the second client when it is determined that the service can be provided 134. When the third client 123 transmits a service request 135 for a specific media file to the server 110, the server 110 determines whether service can be provided according to the service capability thereof. If it is determined that a new service cannot be provided, the service request from the third client is rejected 136.
US 6,470,406 B1 discloses managing isochronous processes in a heterogenous work environment. This includes a mechanism for allocating processor resource to streaming servers at admission control time with respect to the business importance of work they will be running. This mechanism includes a provision to preempt currently running streaming work of lesser business importance in order to allocate its share of the processor to the new higher importance of work.
US 2005/0120131 A1 discloses a method for connection acceptance control and rapid determination of optimal multi-media content delivery over networks. The method achieves optimal allocation of band width between the server and the respective clients using a cost function.

### Disclosure of Invention

### Technical Problem

However, the above-described method is problematic in that whether service can be provided is determined by the order of the service requests without considering the degrees of importance of the service requests from the clients, and therefore an important service request cannot be given priority. Furthermore, in the case where the server is a source that provides a single service connection, such as a Compact Disc (CD), a Digital Video Disc (DVD) or a tuner, and a user desires to be continuously provided with the same service while moving within a home, a problem occurs in that the new service connection is limited due to an existing service connection.

### Technical Solution

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a method and system for providing a streaming service, which provides a user interface that allows a user to set the priority of a service request, thus being capable of carrying out the user's service request prior to an existing connection.

According to an aspect of the present invention, there is provided a method of providing a streaming service in a home network, including: requesting a streaming service and transmitting information about the priority of the request to the server; and connecting to the server, which selectively disconnects the connection of a client that has a priority lower than that of the transmitted request, depending on whether the requested streaming service is available, and receiving the requested streaming service.

According to another aspect of the present invention, there is provided a method of providing a streaming service in a home network, including receiving a streaming service request and information about the priority of the request from a first client; selectively disconnecting the connection of a second client that transmitted a request having a priority lower than that of the received request, depending on whether the requested streaming service is available; and transmitting streaming data to the first client.

According to another aspect of the present invention, there is provided a client for a system for providing a streaming service in a home network, including a means for transmitting a streaming service request and information about the priority of the request to a server; a means for selectively connecting to a server, which selectively disconnects a connection with a client that transmitted a request having a priority lower than that of the transmitted request, depending on whether the requested streaming service is available, and receiving the requested streaming service.

According to another aspect of the present invention, there is provided a server for a system for providing a streaming service in a home network, including a means for receiving a streaming service request and information about the priority of the request from a first client; a means for selectively disconnecting the connection of a second client that has a priority lower than that of the received request, depending on whether the requested streaming service is available; and a means for transmitting streaming data to the first client.

### Description of Drawings

The above and other aspects of the present invention will be more clearly understood from the following detailed description of exemplary embodiments taken in conjunction with the accompanying drawings, in which:

FIG. 1 is a diagram illustrating a related art method of providing a streaming service in a home network;

FIG. 2 is a schematic diagram illustrating a method of providing a streaming service in a home network according to an exemplary embodiment of the present invention:

FIG. 3 is a diagram showing a message employed when a client of a system for providing a streaming service in a home network requests a service according to an exemplary embodiment of the present invention;

FIG.4 is a block diagram showing the construction of a system for providing a streaming service in a home network according to an exemplary embodiment of the present invention;

FIG. 5 is a flowchart illustrating an operational process of the client of a system for providing a streaming service in a home network according to an exemplary embodiment of the present invention;

FIG. 6 is a flowchart illustrating an operational process of the server of a system for providing a streaming service in a home network according to an exemplary embodiment of the present invention; and

FIG. 7 is a status diagram showing a connection between the server and client of a system for providing a streaming service in a home network according an exemplary embodiment of the present invention.

### Mode for Invention

The advantages and characteristics of the present invention, and a method of achieving them, will become apparent with reference to exemplary embodiments described in detail later in conjunction with accompanying drawings. However, the present invention is not limited to the exemplary embodiments disclosed below, but may be implemented in various ways. Furthermore, the exemplary embodiments are provided to complete the disclosure of the present invention, and to fully notify those skilled in the art of the scope of the present invention. The present invention is defined only by the appended claims. The same reference numerals are used throughout the different drawings to designate the same or similar components.

A exemplary embodiment of the present invention is described in detail below with reference to the accompanying drawings.

FIG. 2 is a conceptual diagram illustrating a method of providing a streaming service in a home network according to an exemplary embodiment of the present invention.

When a first client 221 transmits a service request 231 for a specific media file to a server 210, the server 210 provides the streaming service of corresponding data 232 to the first client 221. A second client 222 transmits a priority service request 233 for specific content to the server 210. In the case where the server 210 reaches its service-providing limit, the server 210 compares the priority of the service request of the second client 222 with the priority of the existing connection. In this case, the server 210 disconnects the existing connection with the first client 221 if the priority of the new service request is higher than that of the existing connection 234. When a function of disconnecting the connection with the first client 221 is successively performed, the server 210 provides a streaming service to the second client 235. When a third client 223 transmits a service request for specific content 236 to the server 210, the server 210 determines the service capability thereof. In the case where it is determined that the requested service cannot be provided, the server 210 rejects the service request 237 from the third client 223. In this case, the service request from the third client is not a high-priority service request, and therefore the server 210 cannot disconnect the service connection of the second client.

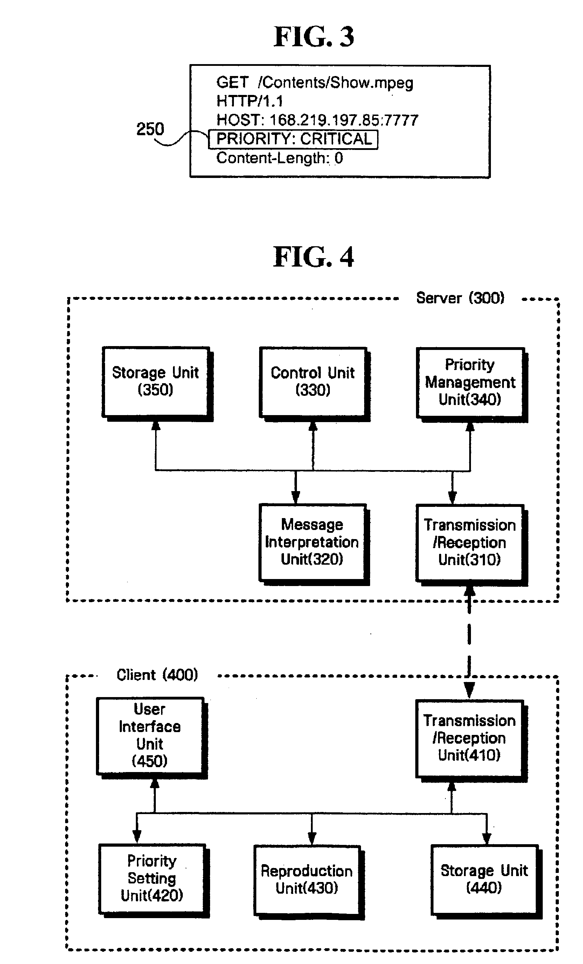

An example of a message employed when a client of a system for providing a streaming service in a home network according to an exemplary embodiment of the present invention requests a service having a priority is described with reference to FIG. 3.

In the case where a home network supporting Universal Plug and Play (UPnP), Digital Living Network Alliance (DLNA) or the like is used, a HyperText Transfer Protocol (HTTP) Get message may be used as an exemplary embodiment of the service request of each client. The exemplary embodiment of FIG. 3 adds a header 250, which indicates the priority of the service request, to the HTTP Get message and informs the server of the priority of the service request employing the message. Priorities may be variously classified according to a method of implementing the home network-based streaming system and a priority management policy. Hereinafter, for casy of description, a description is made under the assumption that the priorities are classified into three levels.

For example, the priorities of the streaming system according to the present exemplary embodiment are classified into three levels, that is, a normal priority level, a critical priority level and a forced level of priority. The normal priority level is the lowest priority level, the forced priority level is the highest priority, and the critical priority level is a priority higher than that of the normal level and lower than that of the forced level. In the case where a user requests a service without assigning a priority (reference numerals 231 and 236 of FIG. 2), the server 210 assigns the corresponding service request a normal priority level rating. A service request having a forced priority level, which is the most urgent service request, has the highest priority that can disconnect any existing service connection. When a single client performs a service request having the forced priority level and is then successfully connected to the server, the priority of the client is subsequently lowered to the critical priority level. This is to guarantee the provision of unconditional service in the case where a service request having the forced priority level is subsequently received from another client.

The service request of an existing system, in which the priority streaming service method according to an exemplary embodiment of the present invention is not adopted, corresponds to a service request in which a priority is not specified, thus being capable of being processed as a priority service request having a normal priority level or a critical priority level according to the service provision policy of the server.

FIG. 4 is a block diagram showing the construction of a system for providing a streaming service in a home network according to an exemplary embodiment of the present invention.

The server 300 of the system for providing a streaming service in a home network according to an exemplary embodiment of the present invention may include a transmission and reception unit 310, a message interpretation unit 320, a priority management unit 340, a control unit 330, and a storage unit 350.

The transmission and reception unit 310 receives a service request message from the client 400 and transmits streaming data corresponding to the service request thereto. The message interpretation unit 320 interprets the service request message received from the transmission and reception unit 310 and extracts information about the priority of the service request therefrom.

The control unit 330 determines whether service can be provided to the client 400, based on the processing capability of the server, the bandwidth of a network and the like, and controls the operations of the transmission and reception unit 310, the message interpretation unit 320, the priority management unit 340 and the storage unit 350.

If, as the result of the determination of the control unit 330, a new connection cannot be accepted based on the current capability of the server, the priority management unit 340 compares the priority of a new service request, which is provided from the message interpretation unit 320, with the priority of the connection of an existing client to which service is already being provided. When a service connection having a priority lower than that of the new service request exists, the priority management unit 340 disconnects the service connection having the lower priority and creates a connection with the client that made the new service connection request. In contrast, when a service connection exist that has a priority higher than that of new service request, the server 300 rejects the new service request.

When the priority of the new service request is a forced priority level, the server 300 disconnects an existing connection having the lowest priority without engaging the process of comparing priorities and creates a connection with the corresponding client, thus being capable of transmitting streaming data thereto. In this case, the priority management unit 340 lowers the priority of the client, for which the connection has been created, to the critical priority level.

The storage unit 350 stores content data for a media service that is provided by the server 300 and information about the priorities of clients currently connected to the server.

The client 400 for the system for providing a streaming service in a home network on according to an exemplary embodiment of the present invention system may include a transmission and reception unit 410, a priority setting unit 420, a reproduction unit 430, a storage unit 440, and a user interface unit 450.

The transmission and reception unit 410 transmits a message requesting a streaming service to the server 300, and receives content data from the server 300.

The user interface unit 450 allows a user to determine whether a user priority setting mode, in which the user can input a priority, is switched, and provides a user interface which receives information about the priority of a service request therethrough.

The priority setting unit 420 inserts information about a priority into the service request message based on the information about the service priority input by the user interface unit 450. In the case where the service is rejected by the server, the priority setting unit 420 automatically increases the priority of the service request by one level.

The storage unit 440 can store the streaming data received through the transmission and reception unit 410. The reproduction unit 430 performs a role of reproducing the streaming data provided from the transmission and reception unit 410 or the storage unit 440.

The components of FIG. 4 may refer to software and hardware, such as Field-Programmable Gate Arrays (FPGAs) or Application-Specific Integrated Circuits (ASICs). The components may be constructed to reside in an addressable storage media, or they may be constructed so as to reproduce one or more processes. The functions provided within the components may be realized by more subdivided components, or an aggregation of the components may be realized as a single component that performs a specific function.

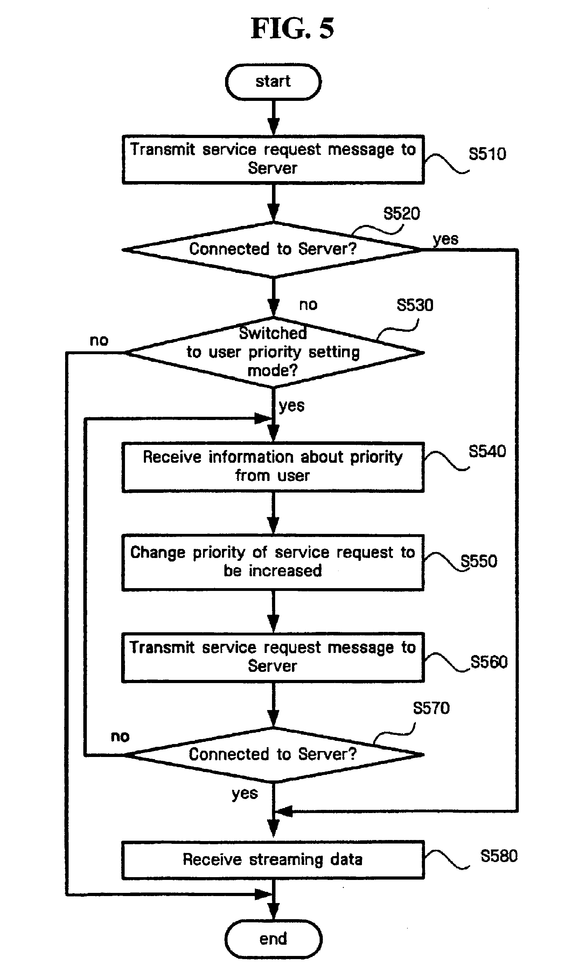

FIG. 5 is a flowchart illustrating an operational process of the client of a system for providing a streaming service in a home network according to an exemplary embodiment of the present invention.

When desired to be provided with a streaming service from the server 300, the client 400, according to an exemplary embodiment of the present invention, transmits a service request message to the server 300 in operation S510. When a connection with the server 300 is created ('Yes' in operation S520), the client 400 receives the streaming data transmitted from the server 300 in operation S580.

When the connection with the server 210 fails ('No' in operation S520), the user interface unit 450 inquires of a user whether to switch into a user priority setting mode in operation S530. When a request to switch into the user priority setting mode is made by the user ('Yes' in operation S530), the user interface unit 450 receives information about the priority of a service request from the user in operation S540, and the priority setting unit 420 changes the priority of the service request based on the information about the priority received in operation S550. The transmission and reception unit 410 transmits a service request message, including information about a changed priority, to the server 300 in operation S560. The client 400 may repeatedly perform the operations of S540 to S570 until the connection with the server 300 succeeds. When the connection with the server 300 is established ('Yes' in operation S570), the client 400 receives the streaming data from the server 300 through the transmission and reception unit 410 in operation S580.

In contrast, when the user does not conduct switching into the user priority setting mode ('No' in operation S530), the client 400 terminates the service request. That is, the streaming service system, according to an exemplary embodiment of the present invention, provides a user interface so that the user can select whether to give up on his or her service request, or whether to disconnect the service connection of another client. Accordingly, the system, according to an exemplary embodiment of the present invention, allows the user to make a general service request, the priority of which is not considered at the early stage, and allows the user to attempt a service request on a priority basis if the general request has failed.

The client, according to another exemplary embodiment of the present invention, does not provide the user priority setting mode, and can automatically request service while increasing the priority of a service request by one level if the connection with the server has failed.

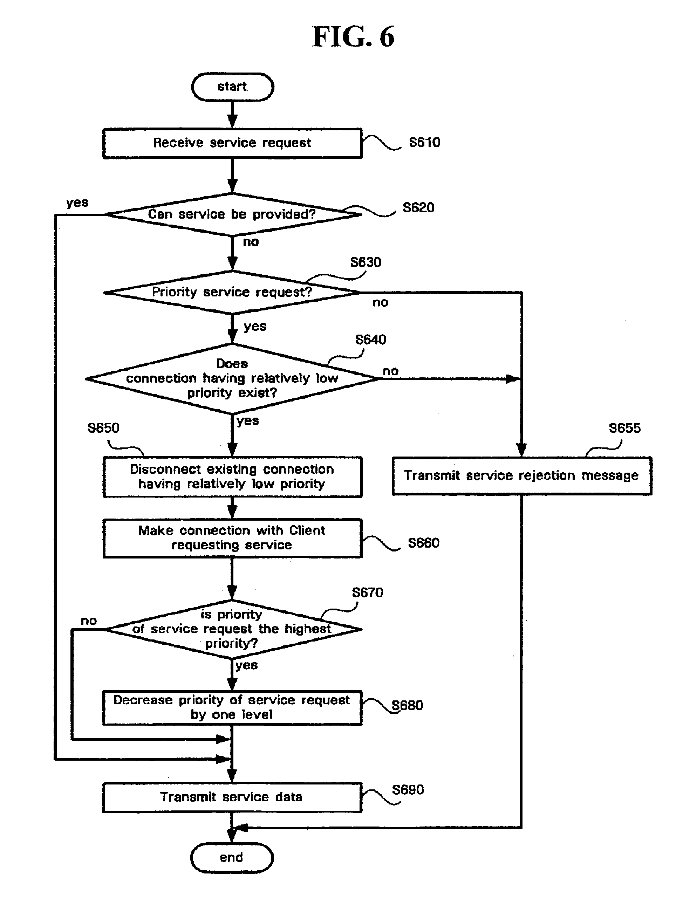

FIG. 6 is a flowchart illustrating an operational process of the server of a system for providing a streaming service in a home network according to an exemplary embodiment of the present invention.

When receiving a service request from the client 400 in operation S610, the server 300, according to an exemplary embodiment of the present invention, determines whether to accommodate a new service request based on the service capability of the server 400 in operation S620. If the new service request exceeds the service capability of the server 400 ('No' in operation S620), the server 300 determines whether the new service request is a priority service request in operation S630. If the new service request is a priority service request ('Yes' in operation S630), the server 300 performs a search to determine whether an existing service connection having a lower priority exists in operation S640. If the existing service connection having the lower priority exists ('Yes' in operation S640), the existing service connection having the lower priority is disconnected in operation S650, and a connection with the client that made the new service request is established in operation S660.

In contrast, if the new service request is not a priority service request (No in operation S630), or if the existing connection having the lower priority does not exist ('No' in operation S640), the server 300 transmits a service rejection message to the corresponding client in operation S655.

If the priority of the new service request is highest, for example, a forced priority level ('Yes' in operation S670), the server 300 changes the priority to decrease by one level, that is, a critical priority level, in operation S680, and transmits service data to the client in operation S690.

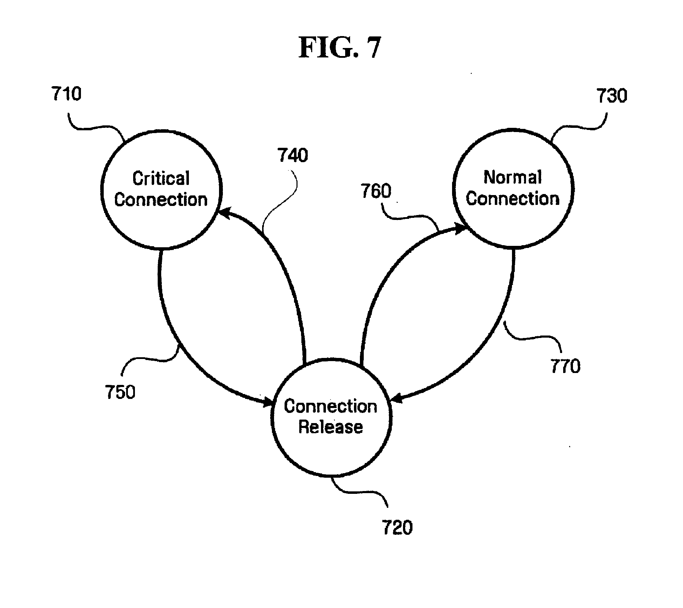

FIG. 7 is a status diagram showing a connection between the server and client of a system for providing a streaming service in a home network according an exemplary embodiment of the present invention.

In the case where priorities are classified into three levels, that is, a normal priority level, a critical priority level, and a forced priority level, the connection status between the server and the client may be one of a critical connection 710, a normal connection 730, and a connection release 720. A forced priority level is the highest priority, and can be chosen by a user who desires to receive a service, prior to the existing connection. Accordingly, the forced priority level does not directly correspond to the connection status between the server and the client.

When the client makes a priority service request 740, the connection release status 720 is switched into the critical connection status 710. When the client makes a service request having no priority or makes a service request 760 having a normal priority level, the connection release status 720 is switched into a normal connection status 730. When another client makes a service request having a forced priority level or the service is completed 750, the critical connection status 710 is switched into the connection release status 720. When another client makes a service request having a critical priority level or a service request having a forced priority level, or the service is completed 750, the normal connection status 730 is switched into the connection release status 720.

### Industrial Applicability

In accordance with the method and system for providing a streaming service according to the present invention, one or more effects can be achieved as follows.

First, the service request of a client connected to a server through a home network is managed according to the degrees of importance, so that an efficient streaming service can be implemented.

Second, a user interface, which allows a user to set the priority of a service request, is provided, so that a streaming service can be received prior to an existing connection.

Although the exemplary embodiments of the present invention have been disclosed for illustrative purposes, those skilled in the art will appreciate that various modifications, additions and substitutions are possible, without departing from the scope of the invention as disclosed in the accompanying claims.

## Claims

1. A method of providing a streaming service in a home network, the method comprising:
transmitting to a server a request for a streaming service and information about a priority of the request; and
connecting to the server and receiving the streaming service from the server if the server determines that the priority of the request is higher than a priority of an existing service connection.

2. The method of claim 1, further comprising providing a user interface for changing the information about the priority depending on whether the request for the streaming service has been connected,
wherein the transmitted information about the priority is information about a priority changed through the user interface.

3. The method of claim 2, further comprising changing the information about the priority according to the information about the priority received through the user interface.

4. The method of claim 2, wherein the user interface receives at least one of information about whether to change the priority of the request for the streaming service and information about a priority desired to be changed from a user.

5. The method of claim 2, wherein the home network supports at least one of Universal Plug and Play and Digital Living Network Alliance.

6. The method of claim 2, wherein the user interface receives at least one of information about whether to change the priority of the request for the streaming service and information about a priority desired to be changed.

7. The method of claim 1, wherein the home network supports at least one of Universal Plug and Play and Digital Living Network Alliance.

8. A method of providing a streaming service in a home network, the method comprising:
receiving from a first client a request for a streaming service and information about a priority of the request;
determining whether the priority of the request received from the first client is higher that a priority of a connection of a second client; and
disconnecting the connection of the second client and transmitting streaming data to the first client, if it is determined that the priority of the request received from the first client is higher than the priority of the connection of the second client.

9. The method of claim 8, further comprising changing the priority of the request from the first client to a lower priority if it is determined that the priority of the request received from the first client is higher than the priority of the connection of the second client.

10. The method of claim 8, further comprising transmitting a service rejection message to the first client if it is determined that the priority of the request received from the first client is lower than the priority of the connection of the second client.

11. The method of claim 8, further comprising storing information about the priority of the request received from the first client.

12. The method of claim 8, wherein the home network supports at least one of Universal Plug and Play and Digital Living Network Alliance.

13. A client (400) for a system for providing a streaming service in a home network, the client (400) comprising:
a transmission and reception unit (410) arranged to transmit to a server (300) a request for a streaming service and information about a priority of the request, and arranged to receive the streaming service if the server determines that the priority of the request is higher than a priority of an existing service connection of another client (400).

14. The client (400) of claim 13, further comprising a user interface unit arranged to provide a user interface for changing the information about the priority depending on whether the request for the streaming service has been rejected,
wherein the transmitted information about the priority is information about a priority that has been changed through the user interface.

15. The client (400) of claim 14, further comprising a priority setting unit (420) arranged to change the information about the priority according to the information about the priority received through the user interface.

16. The client (400) of claim 14, wherein the priority information received through the user interface is information about a highest priority.

17. The client (400) of claim 14, wherein the user interface unit is arranged to provide a user interface that receives information about whether to change a priority of the request for the streaming service therethrough, and to provide a user interface that receives information about a changed priority of the request for the streaming service.

18. The client (400) of claim 14, wherein the user interface is arranged to receive at least one of information about whether to change a priority of the request for the streaming service and information about a changed priority of the request for the streaming service.

19. The client (400) of claim 13, wherein the home network supports at least one of Universal Plug and Play and Digital Living Network Alliance.

20. A server (300) for a system for providing a streaming service in a home network, the server comprising:
a transmission and reception unit (310) arranged to receive a request for a streaming service and information about a priority of the request from a first client (400);
a priority management unit (340) arranged to determine whether the priority of the request received from the first client (400) is higher that a priority of a connection of a second client, and if it is determined that the priority of the request received from the first client (400) is higher than the priority of the connection of the second client, is arranged to disconnect the connection of the second client and transmit streaming data to the first client (400) via the transmission and reception unit (410).

21. The server of claim 20, wherein the priority management unit (340) is arranged to change the priority of the request received from the first client (400) to a lower priority if it determined that the priority of the request received from the first client (400) is higher than the priority of the connection of the second client.

22. The server of claim 20, wherein the priority management unit (340) is arranged to transmit a service rejection message to the first client (400) via the transmission and reception unit (410) if it is determined that the priority of the request received from the first client (400) is lower than the priority of the connection of the second client.

23. The server of claim 20, further comprising a storage unit (440) which is arranged to store the information about the priority of the first client (400).

24. The server of claim 20, wherein the home network supports at least one of Universal Plug and Play and Digital Living Network Alliance.

25. A computer-readable storage medium storing a program for executing a method of providing a streaming service in a home network, the method comprising:
transmitting to a server a request for a streaming service and information about a priority of the request; and
connecting to the server and receiving the streaming service from the server if the server determines that the priority of the request is higher than a priority of an existing service connection.

26. A computer-readable storage medium storing a program for executing a method of providing a streaming service in a home network, the method comprising:
receiving from a first client a request for a streaming service and information about a priority of the request;
determining whether the priority of the request received from the first client is higher that a priority of a connection of a second client; and
disconnecting a connection of the second client and transmitting streaming data to the first client, if it is determined that the priority of the request received from the first client is higher than the priority of the connection of the second client.

## Patentansprüche

1. Verfahren zur Bereitstellung eines Streaming-Dienstes in einem Heimatnetz, wobei das Verfahren Folgendes umfasst:
Übertragen zu einem Server einer Anforderung eines Streaming-Dienstes und Informationen über eine Priorität der Anforderung; und
Verbinden mit dem Server und Empfangen des Streaming-Dienstes vom Server, wenn der Server bestimmt, dass die Priorität der Anforderung höher als eine Priorität einer bestehenden Dienstverbindung ist.

2. Verfahren nach Anspruch 1, weiterhin umfassend Bereitstellen einer Benutzeroberfläche zum Ändern der Informationen über die Priorität in Abhängigkeit davon, ob die Anforderung des Streaming-Dienstes verbunden worden ist,
wobei die übertragenen Informationen über die Priorität Informationen über eine durch die Benutzeroberfläche geänderte Priorität sind.

3. Verfahren nach Anspruch 2, weiterhin umfassend Ändern der Informationen über die Priorität gemäß den über die Benutzeroberfläche empfangenen Informationen über die Priorität.

4. Verfahren nach Anspruch 2, wobei die Benutzeroberfläche mindestens eine Information darüber, ob die Priorität der Anforderung des Streaming-Dienstes zu ändern ist und Information über eine von einem Benutzer zu ändern gewünschte Priorität empfängt.

5. Verfahren nach Anspruch 2, wobei das Heimatnetz mindestens eine der Universal Plug and Play und Digital Living Network Alliance unterstützt.

6. Verfahren nach Anspruch 2, wobei die Benutzeroberfläche mindestens eine Information darüber, ob die Priorität der Anforderung des Streaming-Dienstes zu ändern ist und Information über eine zu ändern gewünschte Priorität empfängt.

7. Verfahren nach Anspruch 1, wobei das Heimatnetz mindestens eine von Universal Plug and Play und Digital Living Network Alliance unterstützt.

8. Verfahren zur Bereitstellung eines Streaming-Dienstes in einem Heimatnetz, wobei das Verfahren Folgendes umfasst:
Empfangen von einem ersten Client einer Anforderung eines Streaming-Dienstes und Informationen über eine Priorität der Anforderung;
Bestimmen, ob die Priorität der von dem ersten Client empfangenen Anforderung höher als eine Priorität einer Verbindung eines zweiten Client ist; und
Abtrennen der Verbindung des zweiten Client und Übertragen von Streaming-Daten zum ersten Client, wenn bestimmt wird, dass die Priorität der vom ersten Client empfangenen Anforderung höher als die Priorität der Verbindung des zweiten Client ist.

9. Verfahren nach Anspruch 8, weiterhin umfassend Ändern der Priorität der Anforderung vom ersten Client zu einer niedrigeren Priorität, wenn bestimmt wird, dass die Priorität der vom ersten Client empfangenen Anforderung höher als die Priorität der Verbindung des zweiten Client ist.

10. Verfahren nach Anspruch 8, weiterhin umfassend Übertragen einer Dienstabweisungsnachricht zum ersten Client, wenn bestimmt wird, dass die Priorität der vom ersten Client empfangenen Anforderung niedriger als die Priorität der Verbindung des zweiten Client ist.

11. Verfahren nach Anspruch 8, weiterhin umfassend Speichern von Informationen über die Priorität der vom ersten Client empfangenen Anforderung.

12. Verfahren nach Anspruch 8, wobei das Heimatnetz mindestens eine von Universal Plug and Play und Digital Living Network Alliance unterstützt.

13. Client (400) für ein System zur Bereitstellung eines Streaming-Dienstes in einem Heimatnetz, wobei der Client (400) Folgendes umfasst:
eine Übertragungs- und Empfangseinheit (410) angeordnet zum Übertragen zu einem Server (300) einer Anforderung eines Streaming-Dienstes und Informationen über eine Priorität der Anforderung, und angeordnet zum Empfangen des Streaming-Dienstes, wenn der Server bestimmt, dass die Priorität der Anforderung höher als eine Priorität einer bestehenden Dienstverbindung eines anderen Client (400) ist.

14. Client (400) nach Anspruch 13, weiterhin umfassend eine Benutzeroberflächeneinheit angeordnet zur Bereitstellung einer Benutzeroberfläche zum Ändern der Informationen über die Priorität in Abhängigkeit davon, ob die Anforderung des Streaming-Dienstes abgewiesen worden ist,
wobei die übertragenen Informationen über die Priorität Informationen über eine Priorität sind, die durch die Benutzeroberfläche geändert worden ist.

15. Client (400) nach Anspruch 14, weiterhin umfassend eine Prioritätseinstellungseinheit (420) angeordnet zum Ändern der Informationen über die Priorität gemäß den durch die Benutzeroberfläche empfangenen Informationen über die Priorität.

16. Client (400) nach Anspruch 14, wobei die durch die Benutzeroberfläche empfangenen Prioritätsinformationen Informationen über eine höchste Priorität sind.

17. Client (400) nach Anspruch 14, wobei die Benutzeroberflächeneinheit zur Bereitstellung einer Benutzeroberfläche angeordnet ist, die Informationen darüber empfängt, ob eine Priorität der Anforderung des Streaming-Dienstes dort hindurch zu ändern ist und zur Bereitstellung einer Benutzeroberfläche, die Informationen über eine geänderte Priorität der Anforderung des Streaming-Dienstes empfängt.

18. Client (400) nach Anspruch 14, wobei die Benutzeroberfläche zum Empfangen mindestens einer von Informationen darüber, ob eine Priorität der Anforderung des Streaming-Dienstes zu ändern ist und Informationen über eine geänderte Priorität der Anforderung des Streaming-Dienstes angeordnet ist.

19. Client (400) nach Anspruch 13, wobei das Heimatnetz mindestens eine von Universal Plug and Play und Digital Living Network Alliance unterstützt.

20. Server (300) für ein System zur Bereitstellung eines Streaming-Dienstes in einem Heimatnetz, wobei der Server Folgendes umfasst:
eine Übertragungs- und Empfangseinheit (310) angeordnet zum Empfangen einer Anforderung eines Streaming-Dienstes und von Informationen über eine Priorität der Anforderung von einem ersten Client (400);
eine Prioritätsverwaltungseinheit (340) angeordnet zum Bestimmen, ob die Priorität der vom ersten Client (400) empfangenen Anforderung höher ist als eine Priorität einer Verbindung eines zweiten Client, und wenn bestimmt wird, dass die Priorität der vom ersten Client (400) empfangenen Anforderung höher als die Priorität der Verbindung des zweiten Client ist, zum Abtrennen der Verbindung des zweiten Client und Übertragen von Streaming-Daten zum ersten Client (400) über die Übertragungs- und Empfangseinheit (410) angeordnet ist.

21. Server nach Anspruch 20, wobei die Prioritätsverwaltungseinheit (340) zum Ändern der Priorität der vom ersten Client (400) empfangenen Anforderung auf eine niedrigere Priorität angeordnet ist, wenn bestimmt wird, dass die Priorität der vom ersten Client (400) empfangenen Anforderung höher ist als die Priorität der Verbindung des zweiten Client.

22. Server nach Anspruch 20, wobei die Prioritätsverwaltungseinheit (340) zum Übertragen einer Dienstabweisungsnachricht zum ersten Client (400) über die Übertragungs- und Empfangseinheit (410) angeordnet ist, wenn bestimmt wird, dass die Priorität der vom ersten Client (400) empfangenen Anforderung niedriger als die Priorität der Verbindung des zweiten Client ist.

23. Server nach Anspruch 20, weiterhin umfassend eine Speichereinheit (440), die zum Speichern der Informationen über die Priorität des ersten Client (400) angeordnet ist.

24. Server nach Anspruch 20, wobei das Heimatnetz mindestens eine von Universal Plug and Play und Digital Living Network Alliance unterstützt.

25. Ein ein Programm zur Ausführung eines Verfahrens zur Bereitstellung eines Streaming-Dienstes in einem Heimatnetz speicherndes computerlesbares Speichermedium, wobei das Verfahren Folgendes umfasst:
Übertragen zu einem Server einer Anforderung eines Streaming-Dienstes und von Informationen über eine Priorität der Anforderung; und
Verbinden mit dem Server und Empfangen des Streaming-Dienstes vom Server, wenn der Server bestimmt, dass die Priorität der Anforderung höher als eine Priorität einer bestehenden Dienstverbindung ist.

26. Ein ein Programm zur Ausführung eines Verfahrens zur Bereitstellung eines Streaming-Dienstes in einem Heimatnetz speicherndes computerlesbares Speichermedium, wobei das Verfahren Folgendes umfasst:
Empfangen von einem ersten Client einer Anforderung eines Streaming-Dienstes und von Informationen über eine Priorität der Anforderung;
Bestimmen, ob die Priorität der vom ersten Client empfangenen Anforderung höher als eine Priorität einer Verbindung eines zweiten Client ist; und
Abtrennen einer Verbindung des zweiten Client und Übertragen von Streaming-Daten zum ersten Client wenn bestimmt wird, dass die Priorität der vom ersten Client empfangenen Anforderung höher als die Priorität der Verbindung des zweiten Client ist.

## Revendications

1. Procédé permettant de fournir un service de diffusion multimédia dans un réseau domestique, le procédé consistant à :
transmettre à un serveur une demande de service de diffusion multimédia et des informations concernant une priorité de la demande ; et
se connecter au serveur et recevoir du serveur le service de diffusion multimédia si le serveur détermine que la priorité de la demande est supérieure à une priorité d'une connexion de service existante.

2. Procédé selon la revendication 1, consistant en outre à fournir une interface utilisateur permettant de modifier les informations concernant la priorité selon que la demande du service de diffusion multimédia a ou non été connectée,
dans lequel les informations transmises concernant la priorité sont des informations concernant une priorité modifiée au moyen de l'interface utilisateur.

3. Procédé selon la revendication 2, consistant en outre à modifier les informations concernant la priorité conformément aux informations concernant la priorité reçues au moyen de l'interface utilisateur.

4. Procédé selon la revendication 2, dans lequel l'interface utilisateur reçoit d'un utilisateur des informations indiquant s'il est nécessaire de modifier la priorité de la demande de service de diffusion multimédia et/ou des informations concernant une priorité que l'on souhaite modifier.

5. Procédé selon la revendication 2, dans lequel le réseau domestique prend en charge au moins l'un du service UPnP (Universal Plug and Play) et du service DLNA (Digital Living Network Alliance).

6. Procédé selon la revendication 2, dans lequel l'interface utilisateur reçoit des informations indiquant s'il est nécessaire de modifier la priorité de la demande de service de diffusion multimédia et/ou des informations concernant une priorité que l'on souhaite modifier.

7. Procédé selon la revendication 1, dans lequel le réseau domestique prend en charge au moins l'un du service UPnP et du service DLNA.

8. Procédé consistant à fournir un service de diffusion multimédia dans un réseau domestique, le procédé consistant à :
recevoir d'un premier client une demande de service de diffusion multimédia et des informations concernant une priorité de la demande ;
déterminer si la priorité de la demande reçue du client est supérieure à une priorité d'une connexion d'un second client ; et
déconnecter la connexion du second client et transmettre des données de diffusion multimédia au premier client, s'il est déterminé que la priorité de la demande reçue du premier client est supérieure à la priorité de la connexion du second client.

9. Procédé selon la revendication 8, consistant en outre à faire passer la priorité de la demande émanant du premier client à une priorité inférieure s'il est déterminé que la priorité de la demande reçue du premier client est supérieure à la priorité de la connexion du second client.

10. Procédé selon la revendication 8, consistant en outre à transmettre au premier client un message de refus de service s'il est déterminé que la priorité de la demande reçue du premier client est inférieure à la priorité de la connexion du second client.

11. Procédé selon la revendication 8, consistant en outre à stocker des informations concernant la priorité de la demande reçue du premier client.

12. Procédé selon la revendication 8, dans lequel le réseau domestique prend en charge au moins l'un du service UPnP et du service DLNA.

13. Client (400) d'un système destiné à fournir un service de diffusion multimédia dans un réseau domestique, le client (400) comprenant :
une unité de transmission et de réception (410) conçue pour transmettre à un serveur (300) une demande de service de diffusion multimédia et des informations concernant une priorité de la demande ; et conçue pour recevoir le service de diffusion multimédia si le serveur détermine que la priorité de la demande est supérieure à une priorité d'une connexion de service existante d'un autre client (400).

14. Client (400) selon la revendication 13, comprenant en outre une unité d'interface utilisateur conçue pour fournir une interface utilisateur permettant de modifier les informations concernant la priorité selon que la demande de service de diffusion multimédia a ou non été refusée,
dans lequel les informations transmises concernant la priorité sont des informations concernant une priorité ayant été modifiée au moyen de l'interface utilisateur.

15. Client (400) selon la revendication 14, comprenant en outre une unité de définition de priorité (420) conçue pour modifier les informations concernant la priorité conformément aux informations concernant la priorité reçues au moyen de l'interface utilisateur.

16. Client (400) selon la revendication 14, dans lequel les informations de priorité reçues au moyen de l'interface utilisateur sont des informations concernant une priorité la plus élevée.

17. Client (400) selon la revendication 14, dans lequel l'unité d'interface utilisateur est conçue pour fournir une interface utilisateur qui reçoit des informations indiquant s'il est nécessaire de modifier une priorité de la demande de service de diffusion multimédia au moyen de celle-ci, et pour fournir une interface utilisateur qui reçoit des informations concernant une priorité modifiée de la demande de service de diffusion multimédia.

18. Client (400) selon la revendication 14, dans lequel l'interface utilisateur est conçue pour recevoir des informations indiquant s'il est nécessaire de modifier une priorité de la demande de service de diffusion multimédia et/ou des informations concernant une priorité modifiée de la demande de service de diffusion multimédia.

19. Client (400) selon la revendication 13, dans lequel le réseau domestique prend en charge au moins l'un du service UPnP et du service DLNA.

20. Serveur (300) destiné à un système permettant de fournir un service de diffusion multimédia dans un réseau domestique, le serveur comprenant :
une unité de transmission et de réception (310) conçue pour recevoir une demande de service de diffusion multimédia et des informations concernant une priorité de la demande en provenance d'un premier client (400) ;
une unité de gestion de priorité (340) qui est conçue pour déterminer si la priorité de la demande reçue du premier client (400) est supérieure à une priorité d'une connexion d'un second client et, s'il est déterminé que la priorité de la demande reçue du premier client (400) est supérieure à la priorité de la connexion du second client, qui est conçue pour déconnecter la connexion du second client et
transmettre des données de diffusion multimédia au premier client (400) par l'intermédiaire de l'unité de transmission et de réception (410).

21. Serveur selon la revendication 20, dans lequel l'unité de gestion de priorité (340) est conçue pour faire passer la priorité de la demande reçue du premier client (400) à une priorité inférieure s'il est déterminé que la priorité de la demande reçue du premier client (400) est supérieure à la priorité de la connexion du second client.

22. Serveur selon la revendication 20, dans lequel l'unité de gestion de priorité (340) est conçue pour transmettre un message de refus de service au premier client (400) au moyen de l'unité de transmission et de réception (410) s'il est déterminé que la priorité de la demande reçue du premier client (400) est inférieure à la priorité de la connexion du second client.

23. Serveur selon la revendication 20, comprenant en outre une unité de stockage (440) qui est conçue pour stocker les informations concernant la priorité du premier client (400).

24. Serveur selon la revendication 20, dans lequel le réseau domestique prend en charge au moins l'un du service UPnP et du service DLNA.

25. Support de stockage lisible par ordinateur stockant un programme destiné à exécuter un procédé consistant à fournir un service de diffusion multimédia dans un réseau domestique, le procédé consistant à :
transmettre à un serveur une demande de service de diffusion multimédia et des informations concernant une priorité de la demande ; et
se connecter au serveur et recevoir le service de diffusion multimédia du serveur si le serveur détermine que la priorité de la demande est supérieure à une priorité d'une connexion de service existante.

26. Support de stockage lisible par ordinateur stockant un programme destiné à exécuter un procédé consistant à fournir un service de diffusion multimédia dans un réseau domestique, le procédé consistant à :
recevoir d'un premier client une demande de service de diffusion multimédia et des informations concernant une priorité de la demande ;
déterminer si la priorité de la demande reçue du premier client est supérieure à une priorité d'une connexion d'un second client ; et
déconnecter une connexion du second client et transmettre des données de flux continu au premier client s'il est déterminé que la priorité de la demande reçue du premier client est supérieure à la priorité de la connexion du second client.
